Europäisches Patentamt

**European Patent Office**

**Office européen des brevets**

(11) Veröffentlichungsnummer: **0 261 655**
**B1**

(12) **EUROPÄISCHE PATENTSCHRIFT**

(45) Veröffentlichungstag der Patentschrift:
**07.11.90**

(21) Anmeldenummer: **87113884.8**

(22) Anmeldetag: **23.09.87**

(51) Int. Cl.⁵: **B60S 1/40**

(54) **Verbindungsstück für ein Wischblatt und einen Wischarm.**

(30) Priorität: **26.09.86  DE 3632733**

(43) Veröffentlichungstag der Anmeldung:
**30.03.88 Patentblatt 88/13**

(45) Bekanntmachung des Hinweises auf die Patenterteilung:
**07.11.90 Patentblatt 90/45**

(84) Benannte Vertragsstaaten:
**ES FR GB IT**

(56) Entgegenhaltungen:
**WO-A-81/03308**
**GB-A- 2 021 936**
**GB-A- 2 033 736**
**GB-A- 2 044 082**
**US-A- 3 418 678**
**US-A- 4 389 746**
**US-A- 4 503 580**

(73) Patentinhaber: **SWF Auto-Electric GmbH, Stuttgarter Strasse 119 Postfach 135,
D-7120 Bietigheim-Bissingen(DE)**

(72) Erfinder: **Bauer, Kurt, Wolfsgrubenstrasse 21,
D-7121 Ingersheim 2(DE)**
Erfinder: **Schmid, Eckhardt, Heilbronner Strasse 62,
D-7129 Brackenheim(DE)**

## Beschreibung

Die Erfindung bezieht sich auf ein Verbindungsstück für ein Wischblatt und einen Wischarm gemäß den Merkmalen des Oberbegriffs des Anspruchs 1.

Bei einem bekannten Verbindungsstück dieser Art besteht die Rastfeder aus einem Metall. Die Rastfeder hat an einem ersten Abschnitt eine im wesentlichen U-förmige Abwinklung mit zwei ursprünglich auseinandergespreizten Schenkeln, die zwischen zwei sich senkrecht vor der Lagerbohrung von einer an der Oberseite des Verbindungsstückes angeordneten Rückwand bzw. Rückenwand des im wesentlichen kastenförmigen Bauteils aus nach unten sich erstreckenden Haltewänden im Bauteil verspannt ist. Danach erstreckt sich die Rastfeder in Längsrichtung des Bauteils und schneidet die Lagerbohrung in einem Bereich, der von der Rückenwand des Bauteils weiter entfernt ist als die Drehachse des Gelenkbolzens. Wenn der Gelenkbolzen in die Lagerbohrung eingesteckt ist, liegt die Rastfeder somit an der Unterseite des Gelenkbolzens an. Hinter der Lagerbohrung hat die Rastfeder eine weitere im wesentlichen U-förmige Abwinklung. Diese Abwinklung ragt mit einer als Lösetaste dienenden ebenen Grundfläche durch eine Öffnung in der Rückenwand des Bauteils. Die Verriegelung zwischen dem Gelenkbolzen und dem Verbindungsstück ist also bei Bedarf auf einfache Weise dadurch lösbar, daß man die Lösetaste nach unten drückt. Weil sich die Rastfeder aber durch eine Öffnung in der Rückenwand des Bauteils erstreckt, können leicht Schmutz, Wasser und Eis in das Verbindungsstück eindringen, was sich negativ auf die Sicherheit der Gelenkverbindung und zumindest dann auch auf die Gebrauchsdauer der Rastfeder auswirkt, wenn diese aus einem nicht korrosionsfesten Material gefertigt ist. Außerdem entspricht das Verbindungsstück nicht erhöhten stilistischen Anforderungen.

Aufgabe der vorliegenden Erfindung ist es, ein Verbindungsstück der eingangs genannten Art zu schaffen, das auf lange Dauer eine sichere Gelenkverbindung gewährleistet, aber dennoch so einfach wie möglich handhabbar ist.

Diese Aufgabe wird von einem Verbindungsstück gelöst, welches neben den im Oberbegriff des Anspruchs 1 aufgeführten Merkmalen das im kennzeichnenden Teil des Anspruchs 1 aufgeführte Merkmal aufweist. Aufgrund der vorgeschlagenen Abdeckung der Lösetaste der Rastfeder durch einen Flügel, d.h. ein einendig angelenktes und ansonsten freistehendes Element, wird vermieden, daß Schmutz, Wasser oder Eis in das Verbindungsstück eindringen und die Qualität der Gelenkverbindung beeinträchtigen können. Trotzdem ist die Lösetaste der Rastfeder problemlos betätigbar, weil der Flügel in jedem Fall durch Drehung um sein Gelenk nach oben weggeklappt und danach die darunter liegende Lösetaste betätigt werden kann. Wenn bei dem Verbindungsstück die Rastfeder die Lagerbohrung in einem Bereich schneidet, der vom oberen Ende weiter entfernt ist als die geometrische Achse des Gelenkbolzens und demgemäß die Verriegelung zwischen der Rastfeder und dem Gelenkbolzen durch einen von oben nach unten auf die Lösetaste der Rastfeder gerichteten Druck gelöst werden kann, braucht der Flügel dazu nicht weggeklappt zu werden, sondern der Druck kann über ihn auf die Lösetaste ausgeübt werden.

Insbesondere wenn der Flügel nicht selbsttragend ist, wird die in Anspruch 2 aufgezeigte Weiterbildung empfohlen. Der Flügel kann sich dann an der Lösetaste abstützen. Da er hierbei nach einer Weiterbildung der Erfindung aber nur lose auf der Lösetaste aufliegt, besteht bei einem Verbindungsstück, bei dem die Rastfeder die Lagerbohrung in einem Bereich schneidet, welcher vom oberen Ende des Bauteils weiter entfernt ist als, die geometrische Achse des Gelenkbolzens, keine Gefahr, daß die Verriegelung zwischen der Rastfeder und dem Gelenkbolzen durch den vom Flügel selbst ausgeübten Druck ungewollt geschwächt oder gar gelöst werden könnte. Andererseits trägt die Weiterbildung bei einem solchen Verbindungsstück zu einer leichten und schnellen Lösbarkeit der Verriegelung bei, weil zwischen dem Flügel und der Lösetaste kein großer Raum vorhanden ist, der vom Flügel durchquert werden müßte, bis er an der Lösetaste anlangen könnte.

Mit der in Anspruch 3 aufgezeigten Weiterbildung wird die Handhabbarkeit des Flügels beim Lösen der Gelenkverbindung verbessert, weil an der unebenen Oberfläche die Abrutschgefahr vermindert ist.

Wenn der Flügel gemäß Anspruch 4 über ein Filmgelenk einstückig am Bauteil angeformt ist, ist ein besonders sicherer Halt des Flügels am Bauteil gewährleistet. Außerdem ist zu seiner Herstellung keine separate Werkzeugform nötig und er braucht nicht an das Bauteil montiert zu werden.

Prinzipiell kann der Flügel dabei an einer beliebigen Stelle des Bauteils angelenkt sein. Damit er aber nicht größer als zu seiner Funktion nötig ist gefertigt werden muß, wird die in Anspruch 5 vorgeschlagene Anordnung empfohlen. Wenn das Bauteil dabei, wie an sich üblich, länger als breit ausgebildet ist, wird die in Anspruch 6 vorgeschlagene Anordnung des Flügelgelenks empfohlen. Der Flügel fällt zumindest dann lang aus und kann demgemäß problemlos ausgelenkt werden, wenn die Lösetaste der Rastfeder wie an sich üblich relativ nahe hinter einer das Bauteil etwa mittig durchsetzenden Lagerbohrung verläuft.

Durch die in Anspruch 7 und 9 aufgezeigten Weiterbildungen wird die Handhabbarkeit des Flügels beim Lösen der Gelenkverbindung weiter verbessert. Der Flügel steht hier nach oben über die an ihn angrenzenden Bauteilbereiche über, wodurch zum einen leicht erkennbar ist, an welcher Stelle die Gelenkverbindung gelöst werden kann, und zum anderen der Angriff am Flügel erleichtert wird.

In den Ansprüchen 10 bis 14 ist aufgezeigt, wie die Rastfeder auf einfache Weise sicher in den Bauteil festgelegt werden kann. Die in Anspruch 12 aufgezeigte Ausgestaltung des Bauteils ermöglicht eine problemlose Herstellung der Öffnung in einem durch Spritzguß aus Kunststoff zu fertigenden Bauteil mittels eines Seitenschiebers.

Durch die in Anspruch 16 aufgeführte Weiterbildung wird, falls sich die Lagerbohrung über die gesamte Breite der Wand erstreckt, eine großflächige Aufnahme für den Gelenkbolzen ermöglicht, wodurch die Sicherheit der Gelenkverbindung erhöht werden kann. Durch die Weiterbildung kann aber auch eine niedrige Bauhöhe des Verbindungsstücks erreicht werden, wodurch ebenfalls die Sicherheit der Gelenkverbindung erhöht werden kann, weil die Gefahr gering ist, daß das Verbindungsstück durch das Auftreten von Querkräften kippen bzw. knicken kann.

Wenn das Verbindungsstück gemäß Anspruch 19 weitergebildet ist, kann es bei einem Wischblatt verwendet werden, das vom Hersteller mit einem unlösbaren Bolzen, der zur Anlenkung des Wischblatts am Wischarm dient, ausgestattet ist. Solche Wischblätter sind handelsüblich und werden von den Verbrauchern bevorzugt. In den Ansprüchen 20 und 21 sind vorteilhafte Ausgestaltungen der Rastaufnahme für den Wischblattbolzen angegeben.

Durch die in Anspruch 23 aufgeführte Maßnahme wird verhindert, daß sich das Wischblatt ungehindert gegenüber dem Wischarm verdrehen kann und beispielsweise nach dem Abklappen des Wischarms von der Scheibe zur manuellen Scheibenreinigung mit der falschen Seite auf der Scheibe zum Anliegen kommt.

Weitere vorteilhafte Einzelheiten und Ausgestaltungen der Erfindung sind aus den übrigen Unteransprüchen und der nachfolgend erläuterten Zeichnung ersichtlich, die ein Ausführungsbeispiel zeigt. Dabei ist dargestellt in

Fig. 1 ein erfindungsgemäßes Verbindungsstück im Längsschnitt, in

Fig. 2 das Verbindungsstück in Ansicht von der Seite, in

Fig 3. das Verbindungsstück in Ansicht von oben, in

Fig. 4 ein Schnitt entlang der Linie IV - IV in Fig. 2 und in

Fig. 5 ein Schnitt entlang der Linie V - V in Fig. 2 durch das Verbindungsstück im am Wischblatt und Wischarm montierten Zustand.

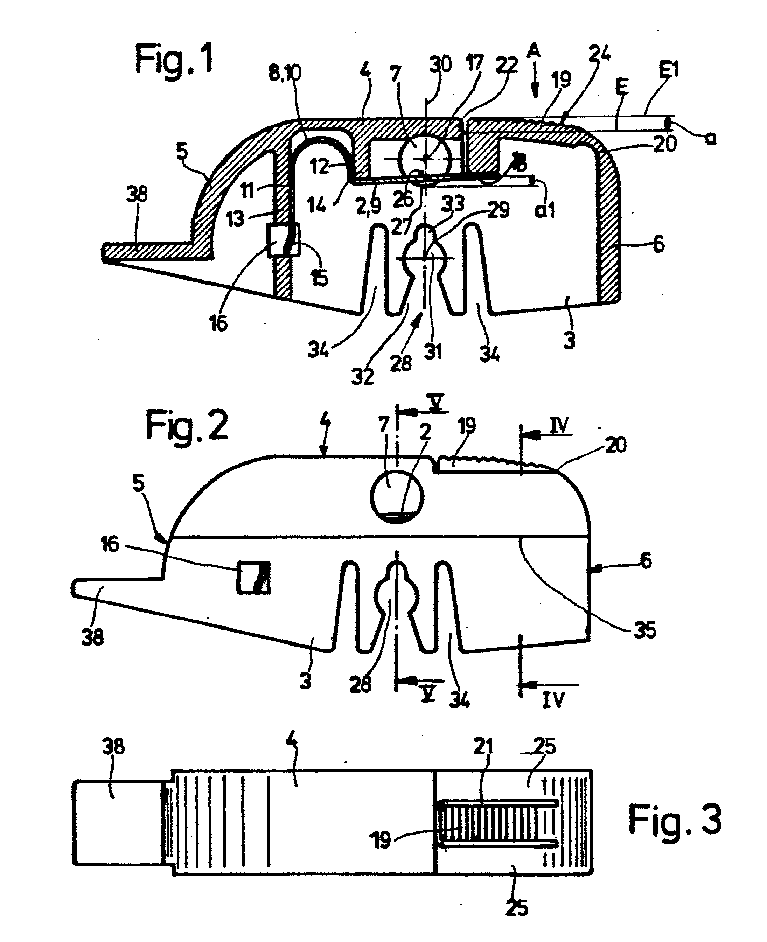

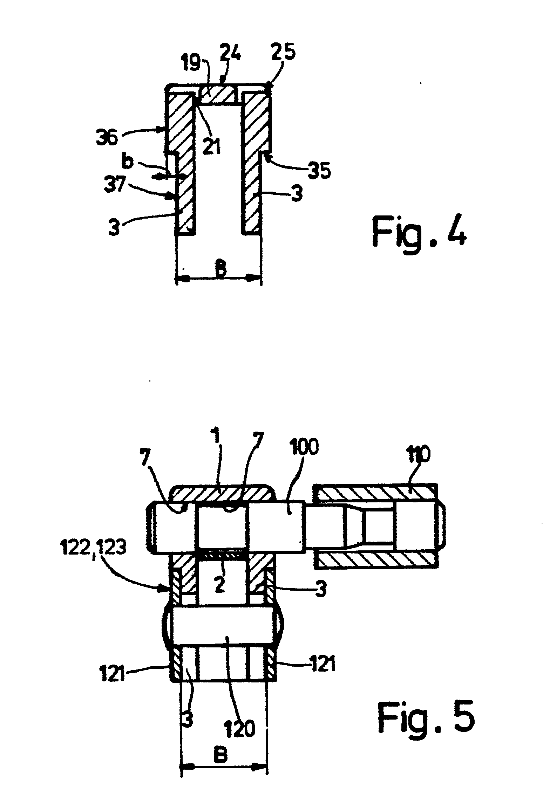

Das erfindungsgemäße Verbindungsstück setzt sich aus einem im wesentlichen kastenförmigen Bauteil 1 aus einem federelastischen Kunststoff und einer metallischen Rastfeder 2 zusammen. Das Bauteil 1 besitzt zwei sich in seitlichem Abstand in Verbindungsstücklängsrichtung parallel zueinander erstreckende Seitenwände 3, welche entlang ihrer Oberkanten durch eine Rückenwand 4 und an ihren vorderen Enden durch eine Vorderwand 5 und an ihren hinteren Enden durch eine Hinterwand 6 miteinander verbunden sind. Etwa auf halber Länge des Bauteils 1 erstreckt sich quer zur Verbindungsstücklängsrichtung und nahe der Oberkanten der Seitenwände 3 eine Lagerbohrung 7 durch die Seitenwände 3 und über einen gewissen Teil der Höhe der Rückenwand 4 (vgl. insbesondere Fig. 1). Die Lagerbohrung 7 dient als Steckaufnahme für einen in Fig. 5 dargestellten Gelenkbolzen 100, welcher seitlich von einem Wischarm 110 absteht.

Die Rastfeder 2 dient zur axialen Lagesicherung des Gelenkbolzens 100. Sie schneidet die Lagerbohrung 7 und wirkt dort in an sich bekannter Weise mit einer Nut 101 am Gelenkbolzen 100 zusammen. Diese Rastfeder 2 verriegelt auch nach längerer Betriebszeit den Gelenkbolzen 100 betriebssicher mit dem Bauteil 1.

Im speziellen besitzt die Rastfeder 2 einen ersten Abschnitt 8 welcher im wesentlichen als U-förmige Abwinklung ausgebildet ist und einen zweiten Abschnitt 9, welcher eben ausgebildet ist. Sie ist derart im Bauteil 1 angeordnet, daß ihre U-Krümmung 10 zu der Rückenwand 4 benachbart verläuft. Die beiden U-Schenkel 11 und 12 der Rastfeder 2 sind zwischen zwei Halterippen 13 und 14 des Bauteils 1 eingespannt, welche sich vor der Lagerbohrung 7 parallel von der Rückenwand 4 aus senkrecht nach unten erstrecken. Die der Vorderwand 5 nähere Halterippe 13 erstreckt sich dabei über die gesamte Höhe des Bauteils 1. Der an dieser Halterippe 13 anliegende U-Schenkel 11 der Rastfeder 2 ist höher als der andere U-Schenkel 12 ausgebildet und an seinem unteren Ende mit einer abgebogenen Fixiermasse 15 versehen. Die Fixiermasse 15 greift in eine Öffnung 16 ein, welche sich quer zur Verbindungsstücklängsrichtung über die gesamte Breite des Bauteils 1 erstreckt (vgl. Fig. 1 und 2). Die Öffnung 16 kann somit bei der Fertigung des Bauteils 1 durch Spritzguß problemlos mittels eines Seitenschiebers hergestellt werden.

Mit ihrem zweiten Abschnitt 9 schneidet die Rastfeder 2 die Lagerbohrung 7 in einem Bereich, der von der Rückenwand 4 weiter entfernt ist, als die geometrische Achse 17 des Gelenkbolzens 100. Die Verriegelung zwischen dem Gelenkbolzen 100 und dem Bauteil 1 ist also durch Druck in Pfeilrichtung A, also nach unten hin lösbar. Dabei stellt das äußere Ende 18 des geraden Abschnitts 9 der Rastfeder 2 die Lösetaste der Rastfeder 2 dar. Nach dem Herausnehmen des Gelenkbolzens 100 federt diese Rastfeder 2 in die in Fig. 1 gezeichnete Ruhelage zurück.

Wesentlich bei dem Verbindungsstück ist dabei, daß die Lösetaste 18 der Rastfeder 2 abgedeckt ist, so daß sie während des Gebrauchs des Verbindungsstücks gegen von oben auf dasselbe einwirkenden Schmutz bzw. einwirkendes Wasser oder Eis geschützt ist, so daß ihre und die Korrosionsgefahr des Gelenkbolzens 100 vermindert und die Qualität der Verriegelung während des Gebrauchs des Verbindungsstücks stets gewährleistet ist. Die Abdeckung der Lösetaste 18 von oben wird dabei mittels eines im wesentlichen quaderförmigen Flügels 19 erreicht, welcher über ein sich quer zur Bauteillängsrichtung erstreckendes Filmgelenk 20 einstückig an dem Endbereich der Rückenwand 4 angeformt ist, von welchem aus sich die Hinterwand 6 nach unten erstreckt. Der Flügel 19 erstreckt sich in Längsrichtung des Bauteils 1 in einem Durchbruch 21 der Rückenwand 4 (vgl. insbesondere Fig. 3 und 4). Er verläuft, wie insbesondere die Fig. 1 zeigt, vom Filmgelenk 20 aus leicht nach oben gekrümmt auf Abstand oberhalb der Rastfeder 2 bis zu dem kurz hinter der Lagerbohrung 7 liegenden Bereich 22 der Rückenwand 4. An seinem dem Filmgelenk 20 abgekehrten, vorderen Ende besitzt der Flügel 19 einen im Querschnitt rechteckigen, nach unten gerichteten Ansatz 23. Mit diesem Ansatz 23 liegt der Flügel 19 lose auf der Lösetaste 18 der Rastfeder 2 auf. Die der Rastfeder 2 abgekehrte Fläche 24 des Flügels 19 ist quer gerillt. Wie insbesondere die Fig. 1 und 3 zeigen, verläuft die der Rastfeder 2 abgekehrte Fläche 24 des Ansatzes 23 in einer Ebene E 1, welche oberhalb der Ebene E liegt, in welcher die der Rastfeder 2 abgekehrten Flächen 25 der seitlich des Durchbruchs 21 verlaufenden Bereiche der Rückenwand 4 verlaufen. Die Flächen 24 und 25 bzw. die Ebenen E und E 1 besitzen dabei einen senkrechten Abstand a voneinander, welcher größer ist als der senkrechte Abstand a 1 zwischen der oberen Oberfläche 26 der Rastfeder 2 und dem unteren Bereich 27 der Mantelfläche der Lagerbohrung 7. Damit ist der Abstand a der Ebenen E und E 1 größer als der Rasthub zwischen der Rastfeder 2 und dem Gelenkbolzen 100. Aufgrund all dieser zuvor beschriebenen Einzelheiten kann die Verriegelung zwischen dem Gelenkbolzen 100 und der Rastfeder 2 problemlos durch Druck in Pfeilrichtung A auf den Ansatz 23 des Flügels 19, der den Druck in die Lösetaste 18 der Rastfeder 2 einleitet, gelöst werden. Das Filmgelenk 20 läßt dabei ein leichtes Auslenken des Flügels 19 zu, wobei dessen gerillte Oberfläche 24 ein Abrutschen der Bedienungsperson verhindert. Weil die Oberfläche 24 des Flügels 19 über die ihn seitlich begrenzenden Rückenwandflächen 25 übersteht, ist der Flügel 19 ohne die Zuhilfenahme eines schmalen Werkzeugs mittels eines Fingers auslenkbar. Wie insbesondere die Fig. 1 und 2 zeigen, schließt sich die Fläche 24 des Flügels 19 absatzlos an die übrigen Bereiche der in Bauteillängsrichtung leicht nach oben gekrümmten Rückenwand 4 an. Insgesamt gewährleistet somit das Verbindungsstück auf Dauer eine sichere Verriegelung zwischen dem Gelenkbolzen 100 und dem Bauteil 1 bei einem formschönen Aussehen und bei einer leichten Lösbarkeit der Verriegelung bei Bedarf.

Zur Verbindung mit dem Wischblatt 123 besitzt das Verbindungsstück eine Rastaufnahme 28 für einen Wischblatt-Gelenkbolzen 120, der sich auf bekannte Weise zwischen zwei Seitenwangen 121 des Wischblatt-Hauptbügels 122 erstreckt (vgl. Fig. 5). Die Rastaufnahme 28 ist, wie insbesondere die Fig. 1 zeigt, derart in die Seitenwände 3 des Bauteils 1 eingearbeitet, daß die geometrische Achse 29 des Wischblatt-Gelenkbolzens 120 unterhalb der geometrischen Achse 17 des Wischarm-Gelenkbolzens 100 auf einer die Rückenwand 4 senkrecht schneidenden Linie 30 etwa auf halber Höhe des Bauteils 1 verläuft. Sie ist nach unten hin offen. In ihrem oberen Bereich 31 ist sie kreisförmig mit einem dem Wischblatt-Gelenkbolzen 120 angepaßten Durchmesser ausgebildet. In ihrem unteren Bereich 32 erweitert sie sich, so daß sie problemlos von oben auf den Wischblatt-Gelenkbolzen 120 aufgesetzt werden kann. Oberhalb der Rastaufnahme 28 sind die Seitenwände 3 mit jeweils einem Einschnitt 33 versehen. Außerdem sind die Seitenwände 3 sowohl vor als auch hinter der Rastaufnahme 28 mit jeweils einem sich etwa über die halbe Höhe des Bauteils 1 erstreckenden Einschnitt 34 versehen. Die Einschnitte 33 und 34 ermöglichen ein problemloses Auffedern der Rastaufnahme 28 bei der Montage des Verbindungsstücks auf dem Wischblatt-Gelenkbolzen 120.

Wie insbesondere die Fig. 2, 4 und 5 noch zeigen, besitzen die Seitenwände 3 des Bauteils 1 im Bereich ihrer unteren zwei Drittel einen geringeren äußeren Abstand B voneinander als im Bereich ihres oberen Drittels. Die Bereiche gehen in einem Absatz 35 ineinander über. Der Abstand B entspricht dabei dem Abstand, den die Innenflächen der Seitenwangen 121 des Wischblatt-Tragbügels 122 voneinander besitzen und die Breite b jedes Absatzes 35 entspricht der Breite jeder Tragbügel-Seitenwange 121. Nach der Montage des Verbindungsstücks auf dem Wischblatt-Gelenkbolzen 120 liegen die Absätze 35 auf den Oberkanten der Seitenwangen 121 auf und die Außenflächen der Seitenwangen 121 schließen flächenbündig an die Außenflächen 36 der oberen Bereiche der Seitenwände 3 an, während die Außenflächen 37 der unteren zwei Drittel der Seitenwände 3 flächenbündig an den Innenflächen der Seitenwangen 121 des Wischblatt-Tragbügels 122 anliegen.

Wie die Fig. 1 bis 3 weiter zeigen, ist am unteren Ende der Vorderwand 5 ein sich in Bauteillängsrichtung nach vorne erstreckender Fortsatz 38 einstückig angeformt. Der Fortsatz 38 bildet einen Anschlag für den nicht dargestellten Steg des Wischblatt-Tragbügels 122, welcher die Seitenwangen 121 vor und hinter dem Bereich, wo sich das Verbindungsstück erstreckt, entlang der Oberkanten verbindet. Durch den Anschlag wird verhindert, daß sich das Wischblatt ungehindert gegenüber dem Wischarm verdrehen kann und beispielsweise nach dem Abklappen des Wischarms von der Scheibe zur manuellen Scheibenreinigung mit der falschen Seite auf der Scheibe zum Anliegen kommt.

## Patentansprüche

1. Verbindungsstück für ein Wischblatt und einen Wischarm, das aus einem vorzugsweise aus Kunststoff hergestelltem Bauteil (1), welches eine wengistens annähernd quer zur Verbindungsstücklängsrichtung verlaufende Lagerbohrung (7) als Aufnahme für einen Gelenkbolzen aufweist, und einer die Lagerbohrung (7) schneidenden Rastfeder (2) besteht, welche mit einem ersten Endabschnitt (8) vor der Lagerbohrung (7) im Inneren des Bauteils (1) festgelegt ist und an einem zweiten, hinter der Lagerbohrung liegenden Endabschnitt (9) eine Lösetaste (18) besitzt, dadurch gekennzeichnet, daß das Bauteil (1) einen Flügel (19) aufweist, welcher die Lösetaste (18) abdeckt.

2. Verbindungsstück nach Anspruch 1, dadurch gekennzeichnet, daß der Flügel (19) lose auf der Lösetaste (18) aufliegt.

3. Verbindungsstück nach Anspruch 1 oder 2, dadurch gekennzeichnet, daß der Flügel (19) an seiner der Lösetaste (18) abgekehrten Seite eine unebene, beispielsweise eine gerillte Oberfläche (24) besitzt.

4. Verbindungsstück nach einem der vorhergehenden Ansprüche, dadurch gekennzeichnet, daß der Flügel (19) über ein Filmgelenk (20) einstückig an einer Wand (4) des Bauteils (1) angeformt ist.

5. Verbindungsstück nach einem der vorhergehenden Ansprüche, dadurch gekennzeichnet, daß der Flügel (19) an einer Wand (4) des Bauteils (1) angelenkt ist, welche sich in Längsrichtung des Bauteils (1) oberhalb der Rastfeder (2) bis über deren Lösetaste (18) hinaus erstreckt und die einen Durchbruch (21) aufweist, in dem sich der Flügel (19) erstreckt.

6. Verbindungsstück nach Anspruch 5, dadurch gekennzeichnet, daß das Gelenk (20) des Flügels (19) am hinteren Ende (6) der Wand (4) angeordnet ist.

7. Verbindungsstück nach Anspruch 5 oder 6, dadurch gekennzeichnet, daß die der Rastfeder (2) abgekehrten Flächen (25) der seitlich des Durchbruchs (21) verlaufenden Bereiche der Wand (4) in einer Ebene (E) unterhalb der der Rastfeder (2) abgekehrten Fläche (24) des Flügels (19) verlaufen.

8. Verbindungsstück nach Anspruch 7, dadurch gekennzeichnet, daß die Flächen (24, 25) im Bereich der Lösetaste (18) einen senkrechten Abstand (a) voneinander besitzen, welcher wenigstens so groß wie der senkrechte Abstand (a 1) zwischen der Rastfeder (2) und der Mantelfläche (27) der Lagerbohrung (7) ist.

9. Verbindungsstück nach Anspruch 2 und einem der Ansprüche 5 bis 8, dadurch gekennzeichnet, daß der Flügel (19) in Längsrichtung nach oben gekrümmt ist und mit einem nach unten gerichteten Ansatz (23) auf der Lösetaste (18) aufliegt.

10. Verbindungsstück nach einem der Ansprüche 5 bis 9, dadurch gekennzeichnet, daß sich von der Wand (4) aus wenigstens eine Halterippe (13, 14) für den ersten Abschnitt (8) der Rastfeder (2) wenigstens annähernd senkrecht nach unten erstreckt.

11. Verbindungsstück nach Anspruch 10, dadurch gekennzeichnet, daß der erste Abschnitt (8) der Rastfeder (2) eine Fixiernase (15) besitzt, welche in eine Öffnung (16) in der Halterippe (13) eingreift.

12. Verbindungsstück nach Anspruch 11, dadurch gekennzeichnet, daß sich die Öffnung (16) über die gesamte Breite (B) des Bauteils (1) erstreckt.

13. Verbindungsstück nach einem der Ansprüche 10 bis 12, dadurch gekennzeichnet, daß das Bauteil (1) zwei wenigstens annähernd parallel und quer zur Längsrichtung verlaufende Halterippen (13, 14) aufweist und der erste Abschnitt (8) der Rastfeder (2) als im wesentlichen U-förmige Abwinklung ausgebildet ist, deren beide U-Schenkel (11, 12) zwischen den beiden Halterippen (13, 14) verspannt sind.

14. Verbindungsstück nach Anspruch 13, dadurch gekennzeichnet, daß die Rastfeder (8) mit der U-Krümmung (10) der Wand (4) benachbart angeordnet ist und daß die Fixiernase (15) am unteren Ende des äußeren U-Schenkels (11) angeordnet ist und daß dieser U-Schenkel (11) höher als der andere U-Schenkel (12) ist.

15. Verbindungsstück nach wenigstens einem der Ansprüche 5 bis 14, dadurch gekennzeichnet, daß die Wand (4) zwei sich in Längsrichtung des Bauteils (1) wenigstens annähernd parallel zueinander nach unten erstreckende Seitenwände (3) miteinander verbindet, welche von der Lagerbohrung (7) für die Gelenkbolzen (100) durchsetzt werden.

16. Verbindungsstück nach Anspruch 15, dadurch gekennzeichnet, daß die die Lagerbohrung (7) im Bereich der Wand (4) vorgesehen ist.

17. Verbindungsstück nach wenigstens einem der vorhergehenden Ansprüche, dadurch gekennzeichnet, daß die Rastfeder (2) die Lagerbohrung (7) in einem Bereich schneidet, der von der Wand (4) des Bauteils (1) weiter entfernt ist als die geometrische Achse (17) des Gelenkbolzens (100).

18. Verbindungsstück nach wenigstens einem der vorhergehenden Ansprüche, dadurch gekennzeichnet, daß die Rastfeder (2) mit einer Nut (101) im Gelenkbolzen (100) zusammenwirkt.

19. Verbindungsstück nach wengistens einem der vorhergehenden Ansprüche, dadurch gekennzeichnet, daß die Lagerbohrung (7) für einen Wischarm-Gelenkbolzen (100) vorgesehen ist, und daß das Bauteil (1) eine Rastaufnahme (28) für einen Wischblatt-Gelenkbolzen (120) aufweist.

20. Verbindungsstück nach Anspruch 15 und 19, dadurch gekennzeichnet, daß die Rastaufnahme (28) in die Seitenwände (3) eingearbeitet und nach unten hin offen ist.

21. Verbindungsstück nach Anspruch 20, dadurch gekennzeichnet, daß die Seitenwände (3) vor und hinter der Rastaufnahme (28) über einen gewissen Teil ihrer Höhe eingeschnitten sind.

22. Verbindungsstück nach Anspruch 20 oder 21, dadurch gekennzeichnet, daß die geometrische Achse (29) des Wischblatt-Gelenkbolzens (120) unterhalb der geometrischen Achse (17) des Wischarm-Gelenkbolzens (100) auf einer die Wand (4) wenigstens annähernd senkrecht schneidenden Linie (30) verläuft.

23. Verbindungsstück nach wengistens einem der vorhergehenden Ansprüche, dadurch gekennzeichnet, daß das Bauteil (1) an wenigstens einem Ende (5) einen Anschlag (38) für einen Tragbügelbereich des Wischblattes (123) aufweist.

24. Verbindungsstück nach wenigstens einem der vorhergehenden Ansprüche, dadurch gekennzeichnet, daß es das Wischblatt (123) und den Wischarm (110) miteinander verbindet.

25. Verbindungsstück nach wengistens einem der Ansprüche 1 bis 23, dadurch gekennzeichnet, daß es als Baueinheit mit dem Wischarm vorliegt.

26. Verbindungsstück nach wengistens einem der Ansprüche 1 bis 23, dadurch gekennzeichnet, daß es als Baueinheit mit dem Wischblatt vorliegt.

**Revendications**

1. Dispositif d'assemblage pour un balai d'essuie-glace et un bras d'essuie-glace, comprenant, d'une part, une pièce d'assemblage (1), de préférence en matière plastique, qui comporte, pour servir de logement à un axe d'articulation, un perçage (7), formant palier, s'étendant, d'une manière au moins approximative, transversalement à la direction longitudinale du dispositif d'assemblage et, d'autre part, un ressort d'enclenchement (2), recoupant ce perçage-palier (7), qui, par un premier tronçon extreme (8), est fixé à l'intérieur de la pièce d'assemblage (1) en avant du perçage-palier (7) et qui comporte une touche de libération (18) sur un second tronçon extrême (9) situé en arrière de ce perçage-palier, caractérisé en ce que la pièce d'assemblage (1) comporte une aile (19) qui recouvre la touche de libération (18).

2. Dispositif d'assemblage suivant la revendication 1, caractérisé en ce que l'aile (19) repose librement en appui sur la touche de libération (18).

3. Dispositif d'assemblage suivant la revendication 1 ou 2, caractérisé en ce que, sur son coté situé à l'opposé de la touche de libération (18), l'aile (19) comporte une surface (24) irrégulière, par exemple moletée.

4. Dispositif d'assemblage suivant l'une des revendications précédentes, caractérisé en ce que l'aile (19) est réalisée d'une seule pièce sur une paroi (4) de la pièce d'assemblage (1), par l'intermédiaire d'une articulation en bande mince (20).

5. Dispositif d'assemblage suivant l'une des revendications précédentes, caractérisé en ce que l'aile (19) est articulée sur une paroi (4) de la pièce d'assemblage (1) qui s'étend, suivant la direction longitudinale de cette pièce (1) et au-dessus du ressort de déclenchement (2), jusqu'au-dessus de la touche de libération (18) de ce dernier et qui comporte une partie évidée (21) dans laquelle s'étend l'aile (19).

6. Dispositif d'assemblage suivant la revendication 5, caractérisé en ce que l'articulation (20) de l'aile (19) est située à l'extrémité arrière (6) de la paroi (4).

7. Dispositif d'assemblage suivant la revendication 5 ou 6, caractérisé en ce que les surfaces (25), opposées au ressort de déclenchement (2), des zones de la paroi (4) qui s'étendent sur les côtés de la partie évidée (21) sont disposées dans un plan (E) situé au-dessous de la surface (24) de l'aile (19) qui est située à l'opposé du ressort de déclenchement (2).

8. Dispositif d'assemblage suivant la revendication 7, caractérisé en ce que, dans la zone de la touche de libération (18), les surfaces (24, 25) présentent entre elles un espacement vertical (a) qui est au moins égal à l'espacement vertical (a1) existant entre le ressort de déclenchement (2) et la surface cylindrique (27) du perçage-palier (7).

9. Dispositif d'assemblage suivant la revendication 2 et l'une des revendications 5 à 8, caractérisé en ce que l'aile (19) est incurvée vers le haut suivant la direction longitudinale et repose sur la touche de libération (18) par un talon (23) dirigé vers le bas.

10. Dispositif d'assemblage suivant l'une des revendications 5 à 9, caractérisé en ce que, à partir de la paroi (4), une nervure de maintien (13, 14), prévue pour le premier tronçon (8) du ressort de déclenchement (2), s'étend vers le bas d'une manière au moins approximativement verticale.

11. Dispositif d'assemblage suivant la revendication 10, caractérisé en ce que le premier tronçon (8) du ressort de déclenchement (2) comporte un nez de fixation (15) qui s'accroche dans une ouverture (16) ménagée dans la nervure de maintien (13).

12. Dispositif d'assemblage suivant la revendication 11, caractérisé en ce que l'ouverture (16) s'étend sur toute la largeur (3) de la pièce d'assemblage (1).

13. Dispositif d'assemblage suivant l'une des revendications 11 à 12, caractérisé en ce que la pièce d'assemblage (1) comporte au moins deux nervures de maintien (13, 14) s'étendant d'une manière au moins approximativement parallèle et transversalement à la direction longitudinale et en ce que le premier tronçon (8) du ressort de déclenchement (2) est réalisé sous la forme d'une partie coudée sensiblement en U dont les deux branches (11, 12) sont serrées entre les deux nervures de maintien (13, 14).

14. Dispositif d'assemblage suivant la revendication 13, caractérisé en ce que le ressort de déclenchement (8) est disposé, par le coude (10) de sa partie en U, au voisinage de la paroi (4) et en ce que le nez de fixation (15) est disposé à l'extrémité inférieure de la branche extérieure (11) de la partie en U, cette branche (11) étant plus longue que l'autre branche (12) de la partie en U.

15. Dispositif d'assemblage suivant au moins l'une des revendications 5 à 14, caractérisé en ce que la paroi (4) réunit entre elles deux parois latérales (3) qui s'étendent vers le bas suivant la direction longitudinale de la pièce d'assemblage (1) et d'une manière au moins approximativement parallèle l'une à l'autre et qui sont traversées par le perçage-palier (7) prévu pour l'axe d'articulation (100).

16. Dispositif d'assemblage suivant la revendication 15, caractérisé en ce que le perçage-palier (7) est prévu dans la zone de la paroi (4).

17. Dispositif d'assemblage suivant au moins l'une des revendications précédentes, caractérisé en ce que le ressort d'enclenchement (2) recoupe le perçage-palier (7) dans une zone qui est plus éloignée de la paroi (4) de la pièce d'assemblage (1) que l'axe géométrique (17) de l'axe d'articulation (100).

18. Dispositif d'assemblage suivant au moins l'une des revendications précédentes, caractérisé en ce que le ressort de déclenchement (2) coopère avec une gorge (101) ménagée dans l'axe d'articulation (100).

19. Dispositif d'assemblage suivant au moins l'une des revendications précédentes, caractérisé en ce que le perçage-palier (7) est prévu pour un axe d'articulation de bras d'essuie-glace (100) et en ce que la pièce d'assemblage (1) comporte un logement d'enclenchement (28) prévu pour un axe d'articulation de balai d'essuie-glace (120).

20. Dispositif d'assemblage suivant les revendications 15 et 19, caractérisé en ce que le logement d'enclenchement (28) est ménagé dans les parois latérales (3) et s'ouvre vers le bas.

21. Dispositif d'assemblage suivant la revendication 20, caractérisé en ce que les parois latérales (3) sont entaillées, sur une certaine partie de leur hauteur, en avant et en arrière du logement d'enclenchement (28).

22. Dispositif d'assemblage suivant la revendication 20 ou 21, caractérisé en ce que l'axe géométrique (29) de l'axe d'articulation de balai d'essuie-glace (120) est situé, au-dessous de l'axe géométrique (17) de l'axe d'articulation de bras d'essuie-glace (100), sur une ligne (30) qui recoupe perpendiculairement, d'une manière au moins approchée, la paroi (4).

23. Dispositif d'assemblage suivant au moins l'une des revendications précédentes, caractérisé en ce que, à au moins une extrémité (5), la pièce d'assemblage (1) comporte une butée (38) prévue pour une zone de la raclette du balai d'essuie-glace (123).

24. Dispositif d'assemblage suivant au moins l'une des revendications précédentes, caractérisé en ce qu'il réunit entre eux le balai d'essuie-glace (123) et le bras d'essuie-glace (110).

25. Dispositif d'assemblage suivant au moins l'une des revendications 1 à 23, caractérisé en ce qu'il se présente sous la forme d'un ensemble unitaire avec le bras d'essuie-glace.

26. Dispositif d'assemblage suivant au moins l'une des revendications 1 à 23, caractérisé en ce qu'il se présente sous la forme d'un ensemble unitaire avec le balai d'essuie-glace.

**Claims**

1. A connecting member for a wiper blade and a wiper arm consisting of a structural member (1) preferably made from plastic material and having a bearing bore (7) as a receiver for a pivot pin, which bearing bore extends at least substantially transversely to the longitudinal direction of the connecting member, and a locking spring (2) intersecting the bearing bore (7), which locking spring is secured in front of the bearing bore (7) in the interior of the structural member (1) by means of a first end portion (8) and has a release key (18) on a second end portion (9) positioned behind the bearing bore, characterized in that the structural member (1) has a wing (19) covering the release key (18).

2. A connecting member according to claim 1, characterized in that the wind (19) is loosely rested upon the release key (18).

3. A connecting member according to claim 1 or 2, characterized in that on its side not facing the release key (18) the wing (19) has a non-planar, e.g. a grooved surface (24).

4. A connecting member according to at least any one of the preceding claims, characterized in that the wing (19) is integrally formed onto a wall (4) of the structural member (1) via a film hinge.

5. A connecting member according to any one of the preceding claims, characterized in that the wing (19) is articulated onto a wall (4) of the structural member (1), which wall extends in the longitudinal direction of the said structural member (1) above the locking spring (2) and as far as beyond the release key (18) of the latter and which locking spring has an aperture (21) in which the wing (19) extends.

6. A connecting member according to claim 5, characterized in that the link (20) of the wing (19) is arranged at the rear end (6) of the wall (4).

7. A connecting member according to claim 5 or 6, characterized in that the areas (25) of the wall (4) extending laterally of the aperture (21) and not facing the locking spring (2) are running in a plane (E) extending below the area (24) od the wing (19) not facing the locking spring (2).

8. A connecting member according to claim 7, characterized in that in the vicinity of the release key (18) the areas (24, 25) have a perpendicular spacing (a) from each other, which spacing is at least as large as the perpendicular spacing (a1) between locking spring (2) and generated surface (27) of the bearing bore (7).

9. A connecting member according to claim 2 and any one of claims 5 to 8, characterized in that the wing (19) is upwardly curved in the longitudinal direction and rests upon the release key (18) by means of a stud (23) directed downwards.

10. A connecting member according to any one of claims 5 to 9, characterized in that at least one holding rib (13, 14) for a first portion (8) of the locking spring (2) extends at least substantially perpendicularly downwards from the wall (4).

11. A connecting member according to claim 10, characterized in that the first portion (8) of the locking spring (2) has a fixing nose (15) engaging in an opening (16) of the holding rib (13).

12. A connecting member according to claim 11, characterized in that the opening (16) extends over the entire width (B) of the structural member (1).

13. A connecting member according to any one of claims 10 to 12, characterized in that the structural member (1) has at least two holding ribs (13, 14) extending at least substantially in parallel and transversely to the longitudinal direction and that the first portion (8) of the locking spring (2) is formed as a substantially U-shaped bend the two U-shanks (11, 12) of which are braced between the two holding ribs(13, 14).

14. A connecting member according to claim 13, characterized in that the locking spring (8) is adjacent to the wall (4) with its U-curvature (10) and that the fixing nose (15) is arranged at the lower end of the outer U-shank (11) and that the said U-shank (11) is higher than the other U-shank (12).

15. A connecting member according to at least any one of claims 5 to 14, characterized in that the wall (4) connects two side walls (3) with each other, which side walls extend downwards in the longitudinal direction of the structural member (1) at least substantially parallel to each other and which side walls are penetrated by the bearing bore (7) for the pivot pins (100).

16. A connecting member according to claim 15, characterized in that the bearing bore (7) is provided in the area of the wall (4).

17. A connecting member according to at least any one of the preceding claims, characterized in that the locking spring (2) intersects the bearing bore (7) in an area, which is farther away from the wall (4) of the structural member (1) than the geometric shaft (17) of the pivot pin (100).

18. A connecting member according to at least any one of the preceding claims, characterized in that the locking spring (2) co-operates with a groove (101) in the pivot pin (100).

19. A connecting member according to at least any one of the preceding claims, characterized in that the bearing bore (7) is provided for a wiper arm pivot pin (100) and that the structural member (1) includes a locking recess (28) for a wiper blade pivot pin (120).

20. A connecting member according to claim 15 and 19, characterized in that the locking recess (28) is worked into the side walls (3) and is open at the bottom.

21. A connecting member according to claim 20, characterized in that the side walls (3) are cut in over a certain part of their height in front of and behind the locking recess (28).

22. A connecting member according to claim 20 or 21, characterized in that the geometric axis (29) of the wiper blade pivot pin (120) extends below the geometric axis (17) of the wiper arm pivot pin (100) on a line (30) intersecting the wall (4) at least substantially perpendicularly.

23. A connecting member according to at least any one of the preceding claims, characterized in that the structural member (1) comprises a stop (38) for a supporting yoke section of the wiper blade (123) on at least one end (5).

24. A connecting member according to at least any one of the preceding claims, characterized in that the wiper blade (123) and the wiper arm (110) are connected by it.

25. A connecting member according to at least any one of claims 1 to 23, characterized in that it forms a structural unit with the wiper arm.

26. A connecting member according to at least any one of claims 1 to 23, chardcterized in that it forms a structural unit with the wiper blade.

Fig.1

Fig.2

Fig.3

EP 0 261 655 B1

Fig. 4

Fig. 5